# EUROPEAN PATENT SPECIFICATION

(11) **EP 2 576 901 B1**
(45) Date of publication and mention of the grant of the patent: **18.03.2020**
(21) Application number: 11721060.9
(22) Date of filing: 24.05.2011
(51) Int. Cl.: D21H 11/18, D21H 17/36, D21H 21/52, D21H 19/20

(54) **CELLULOSIC BARRIER COMPOSITION COMPRISING ANIONIC POLYMER**
CELLULOSEBARRIEREZUZSAMMENSETZUNG MIT EINEM ANIONISCHEN POLYMER
COMPOSITION BARRIÈRE CELLULOSIQUE COMPRENANT UN POLYMÈRE ANIONIQUE

(30) Priority: 27.05.2010 US 348836 P; 27.05.2010 EP 10164093
(43) Date of publication of application: 10.04.2013
(73) Proprietor: Kemira Oyj, 00180 Helsinki (FI)
(72) Inventor: MALMBORG, Kerstin, S-444 95 Ödsmål (SE); HEIJNESSON-HULTÉN, Anette Monica, S-443 39 Lerum (SE); SANDSTRÖM, John, S-444 60 Stora Höga (SE)
(74) Representative: Berggren Oy, Turku
(86) International application number: PCT/EP2011/058461
(87) International publication number: WO 2011/147823

(56) References cited:
- WO-A1-95/26441
- WO-A1-2006/056737
- WO-A1-2007/001229
- WO-A1-2008/076056
- WO-A1-2009/153225
- WO-A1-2010/033960
- US-A1- 2001 004 869
- US-B1- 6 183 596
- "Coating compsn. for paper - comprises aq. dispersion of vinyl! polymer and/or resin contg. micro-fibrillated cellulose", WPI / THOMSON,, vol. 1983, no. 50, 8 November 1983 (1983-11-08), XP002606294,

## Description

### Technical Field of Invention

The present invention relates to a composition comprising cellulosic fibres, an at least partially hydrolysed vinyl acetate polymer and an anionic polymer, a self-supporting film formed from such a composition, a method for producing such a self-supporting film, a multilayer article comprising such a composition or such a self-supporting film arranged on a substrate, a method for the production of such a multilayer article, and the use of such a composition or such a self-supporting film to provide a barrier to a permeable substrate.

### Technical Background of the Invention

Barriers find their use in many applications. For example, in many foodstuff packaging applications, there is a need to protect the foodstuff from oxygen to prevent oxidation of food components, which may reduce the quality and/or flavour of the foodstuff. This can be done by using a material that has low permeability to oxygen, conventionally referred to as an oxygen barrier.

Other barrier properties that may find used in packaging food and other articles are obvious to the person skilled in the art and includes barriers to liquid, vapour, aromas, grease, micro organisms, etc.

While there is a need for barriers, there is also a desire to provide such barriers that to a large extent is based on material from renewable sources.

Cellulosic fibres, such as microfibrillar and/or highly refined cellulose fibres have previously been investigated, e.g. for use in barriers.

WO00/05310 relates to a processes and materials in which highly refined cellulose fibres are broken down into microfibers and further processes into compositions, films, coatings and solid materials which are biodegradable and even edible.

WO2009/123560 relates to compositions comprising microfibrillated cellulose and one or more polysaccharide hydrocolloids, and the use of such compositions, *inter alia* to provide a barrier on a sheet of paper.

WO2006/056737 relates to bio-composite materials comprising cellulose fragments, 5 to 55 wt% hydrophilic binders and 5 to 65 wt% hydrophobic binders, and the use of such materials as a high strength material being impermeable to water.

US 6 183 596 relates to a paper coated with a coating material containing microfibrillated cellulose, and describes surface sizing coating materials comprising 0.1-10 wt% of super microfibrillated cellulose being added to conventionally known coating materials.

US 2001/004869 discloses compositions comprising essentially amorphous cellulose nanofibrils, at least one additive chosen from carboxycellulose with a degree of substitution of more than 0.95, a natural polysaccharide, a polyol, and an optional co-additive, the content of the additive and optional co-additive being less or equal to 30 weight-%, relative to the weight of nanofibrils, additive and optional co-additive.

However, there is still a need of providing barrier materials with improved performance in terms of physical and mechanical properties, e.g. permeability, tensile strength, stiffness and creasability.

### Summary of the Invention

One object of the present invention is to at least partly meet the needs in the art and to provide a barrier based on a significant amount of material from renewable sources having good barrier properties.

Another object of the present invention is to provide a barrier based on a high amount of material from renewable sources and exhibiting good physical properties, especially mechanical strength.

The present inventors have surprisingly found that these and other object can be met by forming layers, such as self-supporting films and coating layers, from certain compositions comprising cellulose fibres, an at least partially hydrolyzed vinyl acetate polymer and at least one anionic polymer, as defined in claims 1, 8, 10, 13, 15 and 19.

It has been shown that while to a large extent being based on material from renewable sources, a self-supporting film or coating layer formed from such compositions exhibits excellent mechanical properties and barrier properties.

Hence, in a first aspect, the present invention relates to a composition as defined in claim 1. The composition comprises a) cellulose fibres having a number average length of from 0.001 to 0.2 mm and a specific surface area of from 1 to 100 m²/g; b) an at least partially hydrolysed vinyl acetate polymer; and c) at least one anionic polymer, wherein the composition comprises from 55 to 65 wt% of a) and from 35 to 45 wt% of b) based on the dry weight of a) and b) in the composition; as well as 0.1 to 3 wt% of c), based on the dry weight of a), b) and c) in the composition.

In a second aspect, the present invention relates to a method for the manufacturing of a self-supporting film as defined in claim 8 and comprising the steps of forming a film from a composition according to on a supporting surface, removing at least part of the water from said composition and removing the so formed self-supporting film from said supporting surface.

In a third aspect, the present invention relates to a self-supporting film as defined in claim 10 and formed from a composition as defined above.

In a fourth aspect, the present invention relates to a multilayer article as defined in claim 13 and comprising a substrate and a layer of a composition or a self-supporting film as defined above arranged on a least one side of said substrate.

In a fifth aspect, the present invention relates to the use as defined in claim 19 of a composition or self-supporting film as defined above to provide a barrier to a permeable substrate.

These and other aspects of the invention will now be described in further detail.

### Detailed Description of the Invention

A composition of the present invention comprises at least the following components in addition to water:
a) cellulose fibres having a number average length of from 0.001 to 0.2 mm and a specific surface area of from 1 to 100 m²/g;
b) an at least partially hydrolyzed vinyl acetate polymer; and
c) at least one anionic polymer.

The amount of the cellulose fibres a) in a composition of the present invention is from 55, to 65 wt% based on the dry weight of a) and b) in the composition.

The amount of the at least partially hydrolyzed vinyl acetate polymer b) in a composition of the present invention is from 35, to 45 wt% based on the dry weight of a) and b) in the composition.

The amount of the at least one anionic polymer c) in a composition of the present invention is from 0.1, even more preferably from 0.3, most preferably from 0.5, to 3 and most preferably to 2 wt% of the dry weight of a), b) and c) in the composition.

The composition of the present invention comprises from 55 to 65 wt% of a) cellulose fibres having a number average length of from 0.001 to 0.2 mm and from 35 to 45 wt% of b) an at least partially hydrolyzed vinyl acetate polymer, based on the dry weight of a) and b) in the composition, and from 0.1 to 3 wt% of c) at least one anionic polymer, based on the dry weight of a), b) and c) in the composition.

Preferably a), b) and c) together constitutes at least 90, most preferably at least 95 and in some cases even 100 wt% of the dry weight of a formulation of the present invention.

The composition of the present invention is preferably free from or comprises less than 5 wt%, based on the dry weight of the composition, of hydrophobic binders. Examples of such hydrophobic binders include hydrophobic polymers comprising epoxies (such as bisphenol-A or modified bisphenol-A epoxies), polyurethanes, phenolic resins, hydrophobic acrylics and siloxanes.

The cellulose fibres contemplated for use as component a) in the present invention has a number average length of from 0.005, preferably from 0.01, more preferably from 0.02 to 0.2, more preferably to 0.1 mm and a specific surface area of from 1, preferably from 1.5, most preferably from 3 to 100, preferably to 15, most preferably to 10 m²/g (as determined by adsorption of N₂ at 177 K according to the BET method using a Micromeritics ASAP 2010 instrument).

The number average width of the cellulose fibres preferably is from 5, more preferably from 10, most preferably from 20 to 100, more preferably to 60, most preferably to 40 µm (as measured with an L&W Fiber Tester).

As used herein, the term "number average", as used in number average length and number average width, refers, e.g. in the context of fibre length, to the arithmetic mean or average of the length of the individual fibres, such as determined by measuring the length of *n* fibres, summing the lengths, and dividing by *n.*

Sources of cellulose for use in this invention include, but are not limited to the following: wood fibres, e.g. derived from hardwood or softwood, such as from chemical pulps, mechanical pulps, thermo mechanical pulps, chemical treated mechanical pulps, recycled fibres or newsprint; seed fibres, such as from cotton; seed full fibre, such as from soybean hulls, pea hulls, corn hulls; bast fibres, such as from flax, hemp, jute, ramie, kenaf; leaf fibres, such as from manila hemp, sisal hemp; stalk or straw fibres, such as from bagasse, corn, wheat; grass fibres, such as from bamboo; cellulose fibres from algae, such as velonia; bacteria or fungi; and parenchyma cells, such as from vegetables and fruits. The source of the cellulose is not limiting, and any source may be used, including synthetic cellulose or cellulose analogues.

In embodiments of the present invention, the cellulose fibers comprise microfibrillar cellulose fibres.

For purposes of the present invention microfibrillar cellulose refers to small diameter, high length-to-diameter ratio substructures which are comparable in dimensions to those of cellulose microfibrils occurring in nature.

According to one embodiment, the microfibrillar cellulose, is modified e.g. by means of grafting, cross-linking, chemical oxidation, for example by use of hydrogen peroxide, Fenton's reaction, and/or TEMPO; physical modification such as adsorption, e.g. chemical adsorption; and enzymatic modification. Combined technologies may also be used to modify the microfibrillar cellulose.

Cellulose can be found in nature in several hierarchical levels of organization and orientation. Cellulose fibres comprise a layered secondary wall structure within which macrofibrils are arranged.

Macrofibrils comprise multiple microfibrils which further comprise cellulose molecules arranged in crystalline and amorphous regions. Cellulose microfibrils range in diameter from 5 to 100 nanometers for different species of plant, and are most typically in the range of from 25 to 35 nanometers in diameter. The microfibrils are present in bundles which run in parallel within a matrix of amorphous hemicelluloses (specifically xyloglucans), pectinic polysaccharides, lignins, and hydroxyproline rich glycoproteins (includes extensin). Microfibrils are spaced approximately 3-4 nm apart with the space occupied by the matrix compounds listed above. The specific arrangement and location of the matrix materials and how they interact with the cellulose microfibrils is not yet fully known.

Microfibrillar cellulose is typically prepared from native cellulose fibres that have been delaminated to small fragments with a large proportion of the microfibrils of the fibre walls uncovered.

Delamination can be carried out in various devices suitable for delaminating the fibres of the cellulose. The prerequisite for the processing of the fibres is that the device is capable or is controlled in such way that fibrils are released from the fibre walls. This may be accomplished by rubbing the fibres against each other, the walls or other parts of the device in which the delamination takes place. According to one embodiment, the delamination is accomplished by means of pumping, mixing, heat, steam explosion, pressurization-depressurization cycle, impact grinding, ultrasound, microwave explosion, milling, and combinations thereof. In any of the mechanical operations disclosed herein, it is important that sufficient energy is applied to provide microfibrillar cellulose fibres. In one embodiment, the microfibrillar cellulose fibres are prepared by treating a native cellulose in an aqueous suspension comprising an oxidant and at least one transition metal, and mechanically delaminating the native cellulose fibres into microfibrillar cellulose fibres.

Methods for the preparation of microfibrillar cellulose fibres suitable for use in the present invention include, but are not limited to those described in WO 2004/055268, WO 2007/001229 and WO 2008/076056
Non-delaminated cellulose fibres are distinct from microfibrillar fibres because the fibre length of the non-delaminated cellulose fibres usually ranges from 0.7 to 2 mm, and their specific surface area is usually from 0.5 to 1.5 m²/g.

As used herein, the term "at least partially hydrolyzed vinyl acetate polymer" refers to any vinyl acetate polymer, including homopolymers of vinyl acetate and copolymers formed from vinyl acetate and at least another monomer, where at least a part of the acetate groups are hydrolyzed into hydroxyl groups. The homopolymers are preferred. In the at least partially hydrolyzed vinyl acetate polymer, preferably at least 50%, more preferably, at least 90%, most preferably at least 98% of the acetate groups are hydrolyzed into hydroxyl group.

Polyvinyl alcohol with a hydrolysation degree of preferably at least 90, more preferably at least 98% is an example of an at least partially hydrolysed vinyl acetate polymer especially contemplated for use in the present invention.

The at least partially hydrolyzed vinyl acetate polymer preferably has a weight average molecular weight of from 5000, more preferably from 25,000, most preferably from 75,000 to 500,000, more preferably to 250,000 and most preferably to 150,000 Da.

Anionic polymers contemplated for use in the present invention may be of synthetic or natural origin, and if of natural origin, it may be chemically modified. It is to be understood that for the purpose of the present invention, the anionic polymer c) is different from the b) at least partially hydrolysed polyvinyl acetate polymer, and from the a) cellulose fibres having a number average length of from 0.001 to 0.2 mm and a specific surface area of from 1 to 100 m²/g.

Preferably, the charge density of the anionic polymer is from 0.1, more preferably from 0.2, most preferably from 1, to 10, more preferably to 8, most preferably to 5 meq/g (as measured on an aqueous polymer solution at pH 7 using a Particle Charge Detector, Mütek PCD03).

Preferably, the weight average molecular weight of the anionic polymer is from 10⁴, more preferably from 10⁵, to 10⁸, more preferably to 10⁷ Da.

Examples of anionic polymers contemplated for use in the present invention includes anionic polysaccharides which may be natural or modified, such as starch, anionic cellulose derivatives, anionic cellulose nanofibres and anionic polysaccharide gums; and acrylic acid based synthetic polymers, such as poly(acrylic acid). In preferred embodiments of the present invention, the anionic polymer comprises an anionic polysaccharide. More preferably, the anionic polysaccharide constitutes at least 50, such as at least 75, for example at least 95 wt%, or even 100 wt% of the anionic polymer c) in the composition of the invention.

As used herein, cellulose nanofibres relates to cellulose fibrils having a number average length of from 100 to 500 nm, and typically a width of from 1 to 20 nm, such as from 2-10 nm. Methods for preparation of cellulose nanofibres include, but are not limited to, those described in WO2009/069641.

Examples of anionic starches include, but are not limited to, starch oxidized with NaClO and catalytic amounts of TEMPO (2,2,6,6-tetramethylpiperidine-1-oxyl).

Examples of anionic cellulose derivatives include carboxyalkyl celluloses, carboxymethyl cellulose, carboxyethyl cellulose, carboxypropyl cellulose, sulfoethyl carboxymethyl cellulose, carboxymethyl hydroxyethyl cellulose etc, wherein the cellulose is substituted with one or more non-ionic substituents, preferably carboxymethyl cellulose.

Examples of anionic polysaccharide gums include natively anionic polysaccharide gums and natively non- or cationic polysaccharide gums being chemically modified to have an anionic net charge.

Polysaccharide gums contemplated for use in the present invention include, but are not limited to Agar, Alginic acid, Beta-glucan, Carrageenan, Chicle gum, Dammar gum, Gellan gum, Glucomannan, Guar gum, Gum arabic, Gum ghatti, Gum tragacanth, Karaya gum, Locust bean gum, Mastic gum, Psyllium seed husks, Sodium alginate, Spruce gum, Tara gum and Xanthan gum, the polysaccharide gums being chemically modified, if necessary, to have an anionic net charge.

Xanthan gum is a presently preferred natively anionic polysaccharide gum for use in the present invention.

Apart from the components a), b) and c) mentioned above, a composition of the present invention may comprise one or more further components, such as, but not limited to, d) micro- or nanoparticles, preferably inorganic micro- or nanoparticles.

As used herein, a "microparticle" refers to a solid or amorphous particle which in at least one dimension has a size smaller than 100 µm, and which in no dimension has a size larger than 1 mm.

As used herein, a "nanoparticle" refers to a solid or amorphous particle which in at least one dimension has a size smaller than 100 nm and which in no dimension has a size larger than 1 µm. It is to be noticed that the in the context of the present invention, nanoparticles form a sub-group of microparticles.

Examples of inorganic micro- or nanoparticles contemplated for use in the present invention include silica or silicate-based particles, including colloidal silica or silicate particles or aggregates thereof, clays and metal carbonate particles
Smectite clays which can be used in the present invention include for example montmorillonite/bentonite, hectorite, beidelite, nontronite, saponite, and mixtures thereof. According to one embodiment, the smectite clay is laponite and/or bentonite.

According to one embodiment, the smectite clay can be modified e.g. by introducing a cation or a cationic group, such as a quaternary ammonium group or an alkali metal, for example lithium.

According to one embodiment, the smectite clay is a synthetic hectorite clay modified with lithium. This clay is e.g. sold under the name Laponite® from Rockwood or Eka Soft F40 from Eka Chemicals AB. Examples of such clays, and the manufacturing of such clays, include those disclosed in WO 2004/000729. The smectite clay used according to the present invention can have a specific surface area from 50 to 1500, for example from 200 to 1200, or from 300 to 1000 m²/g.

Suitable products may be for example Bentonite from Süd-Chemie, BASF and Clayton; Bentolite (Bentonite) from Southern Clay Products; and Hydrotalcite from Akzo Nobel.

If present, the concentration of preferably inorganic micro- or nanoparticles in a composition of the invention is preferably below 5 wt%, such as from 0.1, preferably from 0.3 to 5, preferably 2 wt% based on the dry weight of the total composition.

A composition of the present invention may comprise further components in addition to those mentioned above.

In one embodiment, the composition of the present invention is a fluid composition, preferably a suspension. A fluid composition of the present invention typically comprises from 50, preferably from 60, most preferably from 70, to 99.9, preferably to 95 wt% of water, based on the total weight of the composition. A fluid composition of the invention may for instance be used to form a coating on substrate, or to be processed into a self-supporting film, as will be described below.

In another embodiment, the composition of the present invention is a solid, or non-fluid, composition, and typically comprises at most 50, preferably at most 20 wt% water, based on the total weight of the composition.

As is shown below in the experimental section, a layer, preferably an essentially coherent layer, such as a self-supporting film, or a coating layer on a substrate, formed from a composition of the present invention exhibits good barrier properties and mechanical strength.

A self-supporting film of the present invention is typically produced by forming a layer of a fluid composition of the present invention on a supporting surface, removing at least part of the water from the composition and removing the so formed self-supporting film from the supporting surface. The water can be removed from the composition to form a self-supporting film by any conventional means, such as by application of heat, by reducing the pressure of the surrounding atmosphere or by pressing.

The supporting surface can be any surface on which it is possible to form a layer and remove at least part of the water to form a self-supporting film, such as a flat surface, a drum, an endless belt, a wire fabric, etc.

A self-supporting film of the present invention thus comprises a) cellulose fibres having a number average length of from 0.001 to 0.2 mm and a specific surface area of from 1 to 100 m²/g; b) an at least partially hydrolyzed vinyl acetate polymer; c) at least one anionic polymer; and optionally further components.

The details and concentrations of the components in the self-supporting film are as previously described in connection to the composition of the present invention.

As used herein, a "self-supporting film" refers to a film-like article, preferably of a solid material, that requires no support to maintain its structural integrity.

A self-supporting film of the present invention thus typically has the same constituents as the composition from which it is formed. However, in a self-supporting film of the present invention, the water content is significantly reduced when compared to a fluid composition of the invention. The water content is removed at least to the extent that a self-supporting film is formed. The water may be essentially removed from the self-supporting film, whereby the amount of water present in the film corresponds to the amount at equilibrium with the surrounding atmosphere.

The thickness of a self-supporting film of the present invention is limited, on the one hand by the minimum thickness required to produce a self-supporting film and/or the minimum thickness required to obtain the desired barrier properties, and on the other hand by the maximum thickness at which the film can easily be handled and produced. Preferably, the thickness of the self-supporting film is in the range of from 1, more preferably from 5, most preferably from 10, to 1000, more preferably to 200, most preferably to 100 µm. Film thicknesses of from 20 to 50 µm are especially contemplated.

The self-supporting film may be used alone as such or may be used as a separate layer in a multi layer structure.

A multilayer structure of the invention comprises a substrate and a layer, preferably coherent or essentially coherent layer, of a barrier material comprising a) cellulose fibres having a number average length of from 0.001 to 0.2 mm and a specific surface area of from 1 to 100 m²/g; b) an at least partially hydrolyzed vinyl acetate polymer; c) at least one anionic polymer; and optionally further components, arranged on at least one side of the substrate.

The barrier material may originate from a self-supporting film of the present invention being arranged on substrate, or may originate from coating the substrate with a layer of a fluid composition of the invention, preferably followed by removing at least part of the water from the fluid composition, to produce a barrier coating on the substrate.

In embodiments, a binder, such as an adhesive or thermoplastic is used to bind the self-supporting film to the substrate.

The substrate on which the barrier material is arranged could be any substrate which could benefit from the barrier properties of barrier material i.e. that is permeable to the entity (e.g. gas, vapour, moisture, grease, micro organisms, etc) against which entity the barrier material forms a barrier. Examples of such substrates include, but are not limited to, sheets and films of plastic, metallic or cellulosic materials, such as plastic films, metal films and sheets of paper or paper board. Paper and paper board are preferred materials for the substrate.

In addition to the above-mentioned barrier material and the substrate, a multilayer article may comprise of additional layers of different material arranged on at least one side of the multilayer article or between the barrier material and the substrate. Examples of such additional layers include, but are not limited to, layers of plastic and metallic materials.

The thickness of the barrier material on a multilayer article of the present invention is limited, on the one hand by the minimum thickness required to obtain the desired barrier properties, and on the other hand by the maximum thickness at which the layer can be produced. When the barrier material originates from a self-supporting film as described above, the thickness restrictions of such film applies. When the barrier material is obtained from coating the substrate with a fluid composition, the thickness of the barrier material is preferably from 1, more preferably from 2, to 20, preferably to 10 µm.

A self-supporting film or multi-layer structure of the present invention may be useful in many applications, for example in packaging applications where it is advantageous to either retain gases, moisture, grease or microbes in a package or to keep gases, moisture, grease or microbes from entering into the package.

The present invention will now be further illustrated by the following non-limiting examples.

### Example 1 (Reference)

A) A film (1A) was produced from 100% microfibrillar cellulose (MFC) using a wire wound rod, supplied by BYK-Gardner GmbH, Germany, with a wet film thickness of 200 µm and film width of 200 mm. The film was formed on a polymer film and thereafter left to dry in room temperature for 24 hours. The MFC was prepared from a Fenton pre-treated (40 ppm Fe²⁺, 1% H₂O₂, pH 4, 70°C, 10% pulp consistency, 1 hour) bleached sulphite pulp from Domsjö pulp by passing the fiber suspension of 1% through a pearl-mill (Drais PMC 25TEX) (Zirkoniumoxid pearls, 65% filling grade, rotor speed 1200 revolutions/minutes and flow rate 100 l/h). The characteristics of the MFC were as following: fiber length: 0.08 mm and width: 27.2 µm (L&W Fiber Tester), specific area of about 4 m²/g (BET method using a Micromeritics ASAP 2010 instrument), stability: 100% (0.5% pulp suspension), Water Retention Value (WRV): 3.8 (g/g) (SCAN:-C 62:00).
   Unless otherwise explicitly stated, all percentages in the examples are calculated as weight% on the basis of the dry weight of the films.
B) A film (1B) was prepared as in A), but with 80% MFC and 20% polyvinyl alcohol, PVA 28-99 (Mw: 145.000, DP: 3300) supplied from Aldrich.
C) A film (1C) was prepared as in A), but with 60% MFC and 40% polyvinyl alcohol.
D) A film (1D) was prepared as in A), but with 40% MFC and 60% polyvinyl alcohol.
E) A film (1E) was prepared as in A), but from 100% polyvinyl alcohol.

After drying, the films were removed from the polymer film, stored in a climate room (23 ºC and 50% RH) for 24 hours and thereafter analyzed for their grammage, thickness, strength properties (ISO 536:1995, ISO 534:1988, ISO 1924-2), shrinkage, water vapour transmisson rate, WVTR (ASDTM E96-90) and oxygen transmission rate, OTR (ASTM F1307-90).

Shrinkage was measured by comparing the film area of the film before and after drying. A shrinkage value of 0 indicates that no shrinkage could be observed.

**Table 1**

| **Property** | **Unit** | **1A** | **1B** | **1C** | **1D** | **1E** |
|---|---|---|---|---|---|---|
| Grammage | g/m² | 30 | 28.5 | 28.1 | 32.4 | 28 |
| Thickness | µm | 35 | 26 | 28 | 30 | 29 |
| Tensile index | Nm/g | 58.4 | 60.5 | 68.0 | 52.9 | 38.2 |
| Elongation | % | 2.5 | 2.6 | 2.3 | 2.3 | 7.6 |
| Tensile stiffness index | kNm/g | 5.8 | 7.8 | 7.1 | 7.7 | 2.6 |
| Shrinkage | % | 10 | 0 | 0 | 0 | 2 |
| WVTR | g/m² 24h | 4.3 | n/a | 1.2 | n/a | 0.9 |
| OTR | cm³/m² 24h atm | 8.6 | 0.7 | 0.3 | 0.2 | 0.4 |

From the results in table 1 above, it can be concluded that film materials 1A and 1E is not proper to be used due to their shrinkage when drying. Another observation is also that film 1E is dependent of the relative humidity to have a proper shape. Film materials 1B, 1C, and 1D are form stable and show no shrinkage tendencies. These films have also much higher strength properties than 1A and especially 1E. The overall best film material when it comes to strength properties is 1C.

### Example 2

A) A film (2A) was prepared as film 1A in Example 1, but with 60% MFC, 39.9% polyvinyl alcohol and 0.1% xanthan gum food grade with a charge density of 1.25 meq/g (Particle Charge Detector, Mütek PCD 03) from Vendico Chemical AB (based on the total weight of the film).
B) A film (2B) was prepared as film 2A but with 60% MFC, 39.75% polyvinyl alcohol and 0.25% xanthan gum.
C) A film (2C) was prepared as film 2A, but with 60% MFC, 39.5% polyvinyl alcohol and 0.5% xanthan gum.
D) A film (2D) was prepared as film 2A, but with 60% MFC, 39.25% polyvinyl alcohol and 0.75% xanthan gum.
E) A film (2E) was prepared as film 2A but with 60% MFC, 39% polyvinyl alcohol and 1% xanthan gum.
F) A film (2F) was prepared as film 2A but with 60% MFC, 38.5% polyvinyl alcohol and 1.5% xanthan gum.
G) A film (2G) was prepared as film 2A, but with 60% MFC, 38% polyvinyl alcohol and 2% xanthan gum.
H) A film (2H) was prepared as film 2A but with 60% MFC, 37% polyvinyl alcohol and 3% xanthan gum.
I) A film (2I) was prepared as film 2A but with 60% MFC, 35% polyvinyl alcohol and 5% xanthan gum.
J) A film (2J) was prepared as film 1C in Example 1 (reference).

Analysis of the films was performed as described in Example 1

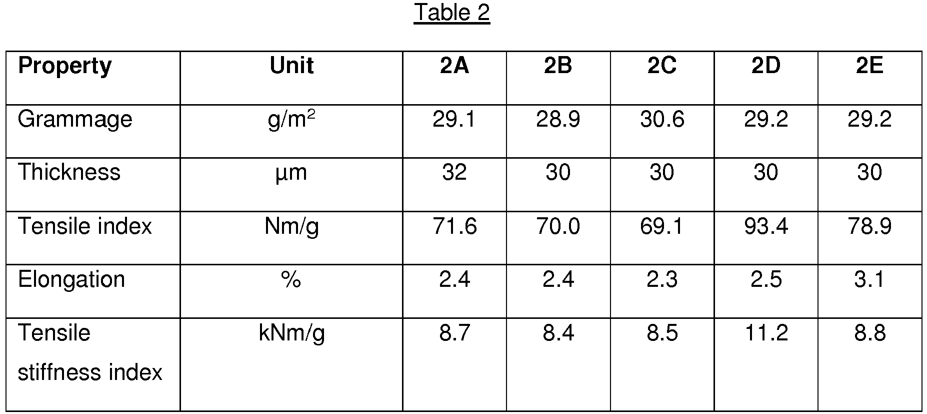

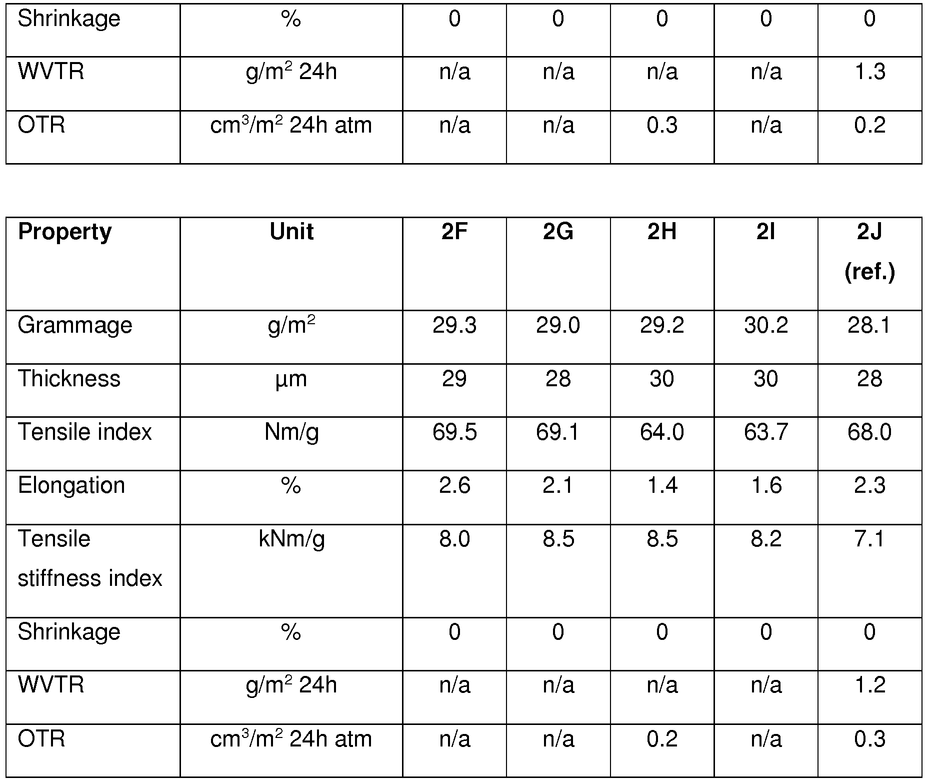

From the results in table 2 above, it can be concluded that film material 2D is significant better than the other film materials when it comes to tensile strength and stiffness. Film 2E shows very good barrier properties, it is to be noticed that an OTR level of about 0.2 is in the same range as the currently best thermoplastic materials (EVOH) (Foods and Packaging Materials - Chemical Interactions, ISBN 0-85404-720-4).

Films with xanthan gum content (2A-2I) could be folded without crack formation in the film. Films 2A-2I appeared to be less fragile and more flexible the than film 2J. Films 2A-2I appeared more waterproof than film 2J, as tested by applying a drop of water on the films and observing its effect on film integrity.

Also, the film formation properties were improved by the addition of xanthan gum, e.g a higher gloss of the films.

### Example 3

A) A film (3A) was prepared as in film 2E in Example 2, but exchanging the xanthan gum for 1% CMC, Gambrosa PA 247 with a charge density of 2.2 meq/g from AkzoNobel.
B) A film (3B) was prepared as in film 2E in Example 2, but exchanging the xanthan gum for 1% anionic starch, Glucapol 2030 with a charge density of 1.4 meq/g from Lyckeby Starkelse.
C) A film (3C) was prepared as in film 2E in Example 2, but exchanging the xanthan gum for 1% polyacrylic acid (Mw: 100.000) with a charge density of 3.2 meq/g supplied from Aldrich.
D) A reference film (3D) was prepared as in film 2E in Example 2, but exchanging the xanthan gum for 1% Eka NP 442 with a charge density of 1.0 meq/g from Eka Chemicals AB.
E) A reference film (3E) was prepared as in film 2E in Example 2, but exchanging the xanthan gum for 1% Eka BSC 20 with a charge density of 0.7 meq/g from Eka Chemicals AB.
F) A reference film (3F) was prepared as in film 2E but exchanging the xanthan gum for 1% guar gum, MEYPRO GUAR CSAAM-20, available from Danisco.
G) A reference film (3G) was prepared as film 1C in Example 1.

Analysis of the films was performed as described in Example 1

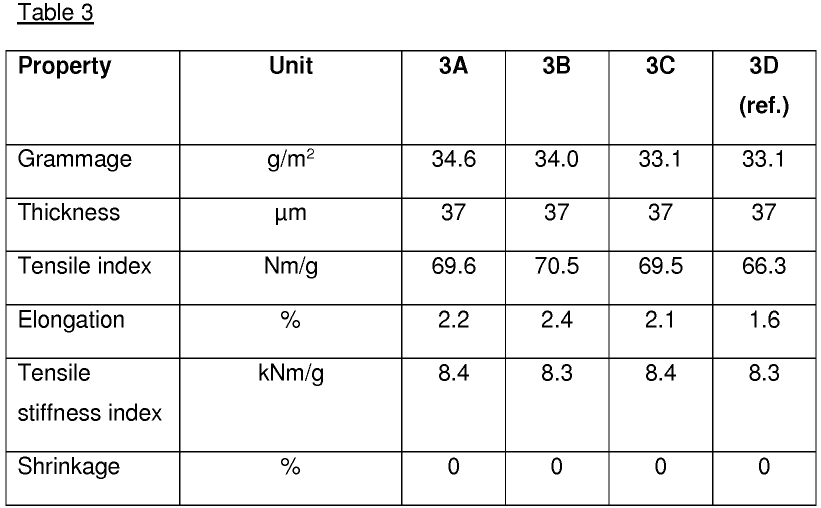

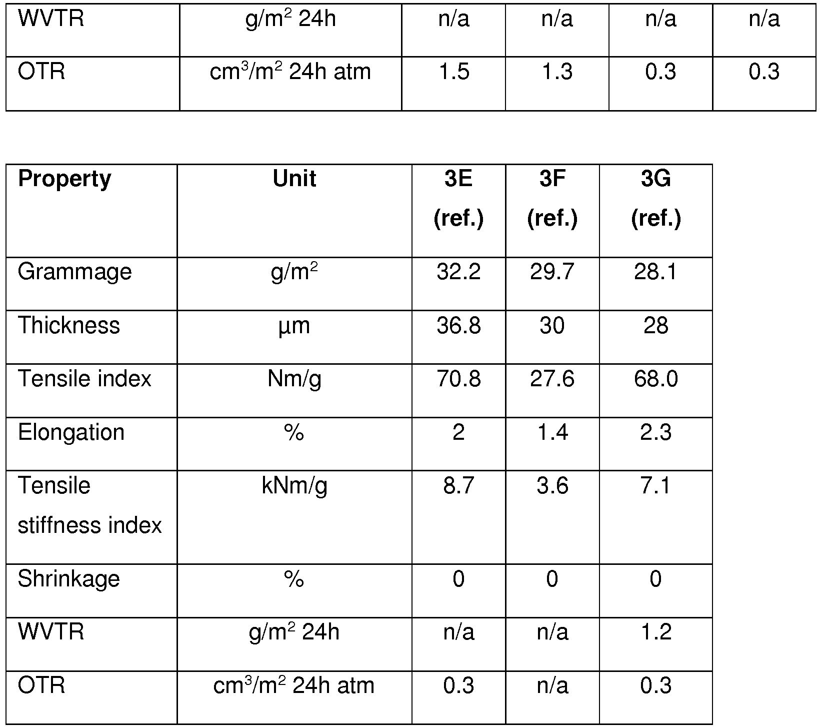

From the results in table 3 above, it can be concluded that film materials in which different types of anionic polymers/products are used as additive are rather equal in strength properties. Another observation is that impaired strength properties of the film are achieved when nonionic guar gum is used as additive (3F).

### Example 4

A) A film (4A) was prepared as film 1A in Example 1 but with 60% MFC, 39.5% polyvinyl alcohol and 0.5% Nano-fibers with a charge density of 0.8 meq/g prepared by TEMPO-mediated oxidation of bamboo fibers.
B) A film (4B) was prepared as film 1A in Example 1 but with 60% MFC, 39% polyvinyl alcohol and 1% Nano-fibers.
C) A film (4C) was prepared as film 1A in Example 1, but with 60% MFC, 38.5% polyvinyl alcohol and 1.5% Nano-fibers.
D) A film (4E) was prepared as in film 1A in Example 1, but with 60% MFC, 38% polyvinyl alcohol and 2% Nano-fibers.
E) A film (4E) was prepared as in film 1A in Example 1, but with 60% MFC, 37,5% polyvinyl alcohol and 2,5 % Nano-fibers.
F) A film (4F) was prepared as film 1A in Example 1, but with 60% MFC, 37% polyvinyl alcohol and 3% Nano-fibers.
G) A reference film (4G) was prepared as film 1A in Example 1, but with 60% MFC, 36% polyvinyl alcohol and 4 % Nano-fibers.
H) A reference film (4H) was prepared as film 1A in Example 1, but with 60% MFC, 35% polyvinyl alcohol and 5 % Nano-fibers.
I) A reference film (4I) was prepared as film 1C in Example 1.

Analysis of the films was performed as described in Example 1

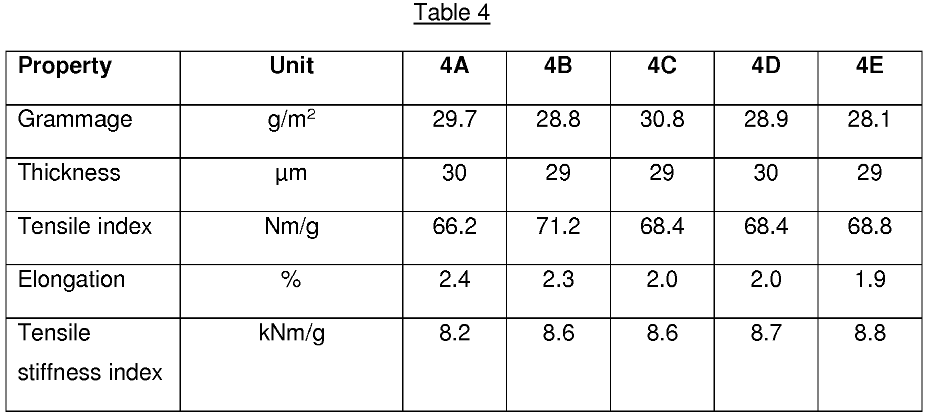

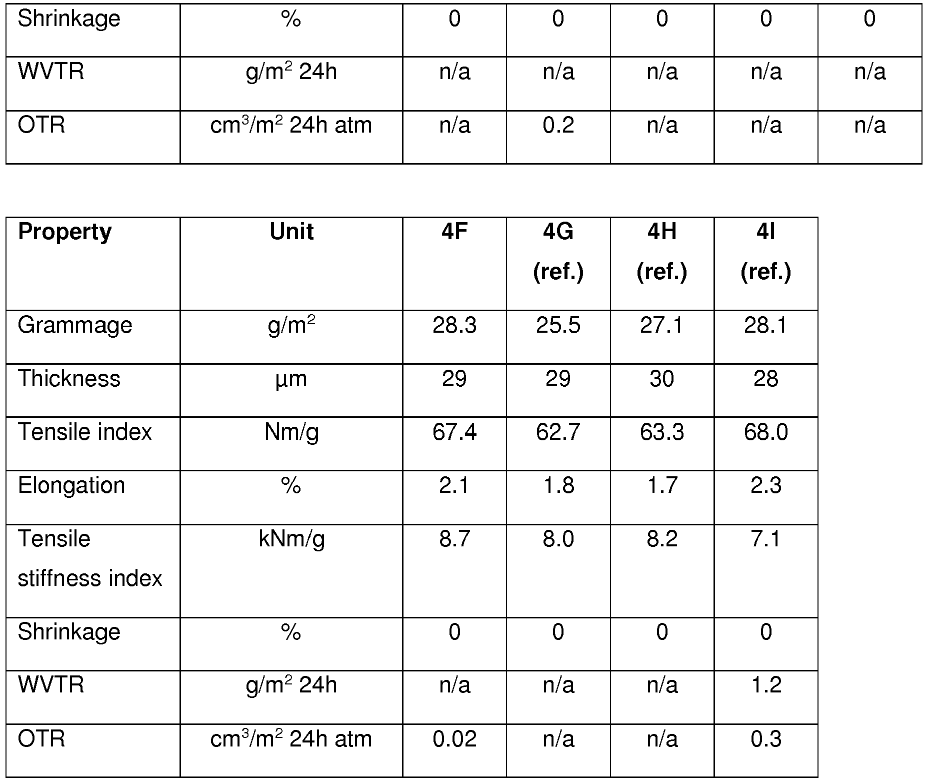

From the results in table 4 above, it can be concluded that all film materials are equal in strength properties but material 4F is significant better than the other materials when it comes to OTR.

### Example 5

A) A film (5A) was prepared as film 1A in Example 1, but from 58% MFC, 40% polyvinyl alcohol 1% xanthan gum and 1% of the formulation of 1:1 (w/w) RDS-Laponite (from Rockwood)/Eka NP 320 (from Eka Chemicals).
B) A film (5B) was prepared as film 5A but from 58% MFC, 40% polyvinyl alcohol, 1% xanthan gum and 1% of the formulation of 1:1 (w/w) RDS-Laponit/Eka NP 2180.
C) A film (5C) was prepared as film 5A, but from 58% MFC, 40% polyvinyl alcohol 1% xanthan gum and 1% Eka NP 2180.
D) A film (5D) was prepared as film 5A but from 58% MFC, 40% polyvinyl alcohol, 1% xanthan gum and 1% RDS-Laponite.
E) A reference film (4I) was prepared as film 1C in Example 1.

Analysis of the films was performed as described in Example 1

**Table 5**

| **Property** | **Unit** | **5A** | **5B** | **5C** | **5D** | **5E (ref.)** |
|---|---|---|---|---|---|---|
| Grammage | g/m² | 30 | 30 | 30 | 30 | 28.1 |
| Thickness | µm | 35 | 30 | 30 | 30 | 28 |
| Tensile index | Nm/g | 91.5 | 70.8 | 60.5 | 58.9 | 68.0 |
| Elongation | % | 4.2 | 2.2 | 1.8 | 2.1 | 2.3 |
| Tensile stiffness index | kNm/g | 9.8 | 8.1 | 7.3 | 7.6 | 7.1 |
| Shrinkage | % | 0 | 0 | 0 | 0 | 0 |
| WVTR | g/m² 24h | n/a | n/a | n/a | n/a | 1.2 |
| OTR | cm³/m² 24h atm | n/a | 0.1 | 0.1 | n/a | 0.3 |

From the results in table 5 above, it can be concluded that film material 5A is significant better than the other film materials regarding strength properties. Films 5B and 5C show excellent OTR properties.

## Claims

1. A composition comprising
a) cellulose fibres, which have a number average length of from 0.001 to 0.2 mm and a specific surface area of from 1 to 100 m²/g and which comprise microfibrillar cellulose fibres;
b) an at least partially hydrolysed vinyl acetate polymer; and
c) at least one anionic polymer
wherein the composition comprises from 55 to 65 wt% of a) and from 35 to 45 wt% of b) based on the dry weight of a) and b) in the composition; as well as 0.1 to 3 wt% of c), based on the dry weight of a), b) and c) in the composition.

2. A composition according to any one of the preceding claims, further comprising:
d) nano- or microparticles.

3. A composition according to any one of the preceding claims, wherein said at least partially hydrolyzed vinyl acetate polymer has a hydrolysation degree of at least 90%.

4. A composition according to any one of the preceding claims, wherein said at least partially hydrolyzed vinyl acetate polymer is a polyvinyl alcohol with a hydrolysation degree of at least 90%.

5. A composition according to any one of the preceding claims, wherein said anionic polymer comprises a polysaccharide.

6. A composition according to claim 5, wherein said polysaccharide comprises an anionic polysaccharide gum.

7. A composition according to any of the preceding claims, comprising from 50 to 99.9 wt% water, based on the total weight of the composition.

8. A method for producing a self-supporting film, comprising
forming a film from a composition according to claim 7 on a supporting surface;
removing at least part of the water from said composition;
removing the so formed self-supporting film from said supporting surface.

9. A method according to claim 8, wherein the so formed self-supporting film comprises at most 50, preferably at most 20 wt% of water.

10. A self-supporting film comprising a composition according to any one of the claims 1 to 6.

11. A self-supporting film according to claim 10 having a thickness of from 1 to 1000 µm, preferably from 10 to 100 µm.

12. A self-supporting film according to claim 10 or 11, comprising at most 50, preferably at most 20 wt% of water.

13. A multi-layered article comprising a substrate and a composition according to any one of the claims 1 to 6 or a self-supporting film of any one of the claims 10 to 12 arranged on at least one surface of said substrate.

14. A multi-layered article according to claim 13, wherein said substrate is a sheet of paper or paper board.

15. A method for the production of a multi-layered article, comprising the steps of:
providing a substrate; and
(i) providing a self-supporting film according to any one of the claims 10 to 12; and
arranging said self-supporting film on said substrate; or
(ii) providing a composition according to claim 7, and
applying a layer of said composition on at least one side of said substrate.

16. A method according to claim 15, wherein said substrate is a sheet of paper or paper board.

17. A method of claim 15 or 16, wherein step (ii) further comprises removing at least part of the water from said composition applied to said substrate such that said layer thereafter comprises at most 50, preferably at most 20 wt% of water.

18. A method of claim 17, wherein said layer comprising at most 50, preferably at most 20 wt% of water, has a thickness of from 1 to 20, preferably from 2 to 10 µm.

19. Use of a composition according to any one of the claims 1 to 7 or a self-supporting film according to any one of the claims 9 to 12, for providing a barrier to a permeable substrate.

20. The use according to claim 19, wherein said permeable substrate is a sheet of paper or paper board.

## Patentansprüche

1. Zusammensetzung, umfassend
a) Cellulosefasern, die eine zahlenmittlere Länge von 0,001 bis 0,2 mm und eine spezifische Oberfläche von 1 bis 100 m²/g haben und die mikrofibrilläre Cellulosefasern umfassen;
b) ein wenigstens teilweise hydrolysiertes Vinylacetatpolymer; und
c) wenigstens ein anionisches Polymer,
wobei die Zusammensetzung 55 bis 65 Gew.-% von a) und 35 bis 45 Gew.-% von b), bezogen auf das Trockengewicht von a) und b) in der Zusammensetzung, sowie 0,1 bis 3 Gew.-% von c), bezogen auf das Trockengewicht von a), b) und c) in der Zusammensetzung, umfasst.

2. Zusammensetzung gemäß einem der vorangehenden Ansprüche, die außerdem umfasst:
d) Nano- oder Mikropartikel.

3. Zusammensetzung gemäß einem der vorangehenden Ansprüche, wobei das wenigstens teilweise hydrolysierte Vinylacetatpolymer einen Hydrolysierungsgrad von wenigstens 90 % hat.

4. Zusammensetzung gemäß einem der vorangehenden Ansprüche, wobei das wenigstens teilweise hydrolysierte Vinylacetatpolymer ein Polyvinylalkohol mit einem Hydrolysierungsgrad von wenigstens 90 % ist.

5. Zusammensetzung gemäß einem der vorangehenden Ansprüche, wobei das anionische Polymer ein Polysaccharid umfasst.

6. Zusammensetzung gemäß Anspruch 5, wobei das Polysaccharid einen anionischen Polysaccharidgummi umfasst.

7. Zusammensetzung gemäß einem der vorangehenden Ansprüche, die 50 bis 99,9 Gew.-% Wasser, bezogen auf das Gesamtgewicht der Zusammensetzung, umfasst.

8. Verfahren zur Herstellung eines selbsttragenden Films, umfassend
Bilden eines Films aus einer Zusammensetzung gemäß Anspruch 7 auf einer tragenden Oberfläche;
Entfernen wenigstens teilweise des Wassers aus der Zusammensetzung;
Entfernen des so gebildeten selbsttragenden Films von der tragenden Oberfläche.

9. Verfahren gemäß Anspruch 8, wobei der so gebildete selbsttragende Film höchstens 50, vorzugsweise höchstens 20 Gew.-% Wasser umfasst.

10. Selbsttragender Film, der eine Zusammensetzung gemäß einem der Ansprüche 1 bis 6 umfasst.

11. Selbsttragender Film gemäß Anspruch 10, der eine Dicke von 1 bis 1000 µm, vorzugsweise von 10 bis 100 µm hat.

12. Selbsttragender Film gemäß Anspruch 10 oder 11, der höchstens 50, vorzugsweise höchstens 20 Gew.-% Wasser umfasst.

13. Mehrschichtiger Gegenstand, umfassend ein Substrat und eine Zusammensetzung gemäß einem der Ansprüche 1 bis 6 oder einen selbsttragenden Film gemäß einem der Ansprüche 10 bis 12, auf wenigstens einer Oberfläche des Substrates angeordnet.

14. Mehrschichtiger Gegenstand gemäß Anspruch 13, wobei das Substrat ein Bogen Papier oder Pappe ist.

15. Verfahren zur Herstellung eines mehrschichtigen Gegenstandes, umfassend die Schritte:
Bereitstellen eines Substrates und
(i) Bereitstellen eines selbsttragenden Films gemäß einem der Ansprüche 10 bis 12 und
Anordnen des selbsttragenden Films auf dem Substrat; oder
(ii) Bereitstellen einer Zusammensetzung gemäß Anspruch 7, und
Auftragen einer Schicht der Zusammensetzung auf wenigstens eine Seite des Substrates.

16. Verfahren gemäß Anspruch 15, wobei das Substrat ein Bogen Papier oder Karton ist.

17. Verfahren gemäß Anspruch 15 oder 16, wobei Schritt (ii) außerdem Entfernen wenigstens eines Teils des Wassers aus der Zusammensetzung, die auf das Substrat aufgetragen wurde, umfasst, sodass die Schicht danach höchstens 50, vorzugsweise höchstens 20 Gew.-% Wasser umfasst.

18. Verfahren gemäß Anspruch 17, wobei die Schicht, die höchstens 50, vorzugsweise höchstens 20 Gew.-% Wasser umfasst, eine Dicke von 1 bis 20, vorzugsweise von 2 bis 10 µm hat.

19. Verwendung einer Zusammensetzung gemäß einem der Ansprüche 1 bis 7 oder eines selbsttragenden Films gemäß einem der Ansprüche 9 bis 12 zur Bereitstellung einer Barriere für ein permeables Substrat.

20. Verwendung gemäß Anspruch 19, wobei das permeable Substrat ein Bogen Papier oder Karton ist.

## Revendications

1. Composition comprenant
a) des fibres de cellulose, qui ont une longueur moyenne en nombre allant de 0,001 à 0,2 mm et une aire massique allant de 1 à 100 m²/g et qui comprennent des fibres de cellulose microfibrillaire ;
b) un polymère d'acétate de vinyle au moins partiellement hydrolysé ; et
c) au moins un polymère anionique
dans lequel la composition comprend de 55 à 65 % en poids de a) et de 35 à 45 % en poids de b) rapporté au poids sec de a) et b) dans la composition ; ainsi que 0,1 à 3 % en poids de c), rapporté au poids sec de a), b) et c) dans la composition.

2. Composition selon l'une quelconque des revendications précédentes, comprenant en outre :
d) des nano- ou micro-particules.

3. Composition selon l'une quelconque des revendications précédentes, dans laquelle ledit polymère d'acétate de vinyle au moins partiellement hydrolysé a un degré d'hydrolyse d'au moins 90 %.

4. Composition selon l'une quelconque des revendications précédentes, dans laquelle ledit polymère d'acétate de vinyle au moins partiellement hydrolysé est un poly(alcool vinylique) avec un degré d'hydrolyse d'au moins 90 %.

5. Composition selon l'une quelconque des revendications précédentes, dans laquelle ledit polymère anionique comprend un polysaccharide.

6. Composition selon la revendication 5, dans laquelle ledit polysaccharide comprend une gomme de polysaccharide anionique.

7. Composition selon l'une quelconque des revendications précédentes, comprenant de 50 à 99,9 % en poids d'eau, rapporté au poids total de la composition.

8. Procédé de production d'un film autoporteur, comprenant
la formation d'un film à partir d'une composition selon la revendication 7 sur une surface porteuse ;
le fait d'enlever de ladite composition, au moins une partie de l'eau ;
le fait d'enlever de ladite surface porteuse, le film autoporteur ainsi formé.

9. Procédé selon la revendication 8, dans lequel le film autoporteur ainsi formé comprend au plus 50, de préférence au plus 20 % en poids d'eau.

10. Film autoporteur comprenant une composition selon l'une quelconque des revendications 1 à 6.

11. Film autoporteur selon la revendication 10, ayant une épaisseur de 1 à 1 000 µm, de préférence de 10 à 100 µm.

12. Film autoporteur selon la revendication 10 ou 11, comprenant au plus 50, de préférence au plus 20 % en poids d'eau.

13. Article multicouche comprenant un substrat et une composition selon l'une quelconque des revendications 1 à 6 ou un film autoporteur selon l'une quelconque des revendications 10 à 12 agencé(s) sur au moins une surface dudit substrat.

14. Article multicouche selon la revendication 13, dans lequel ledit substrat est une feuille de papier ou de carton.

15. Procédé de production d'un article multicouche, comprenant les étapes de :
fourniture d'un substrat ; et
(i) fourniture d'un film autoporteur selon l'une quelconque des revendications 10 à 12 ; et
agencement dudit film autoporteur sur ledit substrat ; ou
(ii) fourniture d'une composition selon la revendication 7, et
application d'une couche de ladite composition sur au moins un côté dudit substrat.

16. Procédé selon la revendication 15, dans lequel ledit substrat est une feuille de papier ou de carton.

17. Procédé selon la revendication 15 ou 16, dans lequel l'étape (ii) comprend en outre le fait d'enlever de ladite composition appliquée audit substrat, au moins une partie de l'eau, de telle sorte que ladite couche comprend ensuite au plus 50, de préférence au plus 20 % en poids d'eau.

18. Procédé selon la revendication 17, dans lequel ladite couche comprend au plus 50, de préférence au plus 20 % en poids d'eau, a une épaisseur de 1 à 20, de préférence de 2 à 10 µm.

19. Utilisation d'une composition selon l'une quelconque des revendications 1 à 7 ou d'un film autoporteur selon l'une quelconque des revendications 9 à 12, en vue de créer une barrière à un substrat perméable.

20. Utilisation selon la revendication 19, dans laquelle ledit substrat perméable est une feuille de papier ou de carton.
